(19) Europäisches Patentamt
European Patent Office
Office européen des brevets

(11) **EP 4 400 737 B1**

(12) **EUROPÄISCHE PATENTSCHRIFT**

(45) Veröffentlichungstag und Bekanntmachung des Hinweises auf die Patenterteilung:
**22.04.2026  Patentblatt 2026/17**

(21) Anmeldenummer: **23151781.4**

(22) Anmeldetag: **16.01.2023**

(51) Internationale Patentklassifikation (IPC):
***F16D 1/10*** *(2006.01)*

(52) Gemeinsame Patentklassifikation (CPC):
**F16D 1/10; F16D 1/101;** F16D 2001/102

(54) **WELLE, NABE, SOWIE WELLE-NABE-VERBINDUNG, SOWIE ELEKTRISCHER AKTOR**

SHAFT, HUB, AND SHAFT-HUB CONNECTION, AND ELECTRIC ACTUATOR

ARBRE, MOYEU, LIAISON ARBRE-MOYEU AINSI QU'ACTIONNEUR ÉLECTRIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**17.07.2024  Patentblatt 2024/29**

(73) Patentinhaber: **IMS Gear SE & Co. KGaA**
**78166 Donaueschingen (DE)**

(72) Erfinder:
• **Süß, Marius**
**78176 Blumberg (DE)**
• **Willmann, Stefan**
**78183 Hüfingen (DE)**
• **Knöpfle, Michael**
**78183 Hüfingen (DE)**
• **Birk, Sebastian**
**78647 Trossingen (DE)**
• **Schachtschneider, Paul**
**78054 Villingen-Schwenningen (DE)**

(74) Vertreter: **Westphal, Mussgnug & Partner**
**Patentanwälte mbB**
**Am Riettor 5**
**78048 Villingen-Schwenningen (DE)**

(56) Entgegenhaltungen:
EP-A1- 1 632 331          EP-A2- 2 058 542
EP-A2- 2 287 484          DE-A1- 10 238 968
DE-A1- 102016 211 797     DE-U1- 9 209 107

**Beschreibung**

Die Erfindung betrifft eine Welle zur Übertragung eines Drehmoments und/oder einer Axialkraft, eine Nabe, eine Welle-Nabe-Verbindung sowie einen elektrischen Aktor.

Im Stand der Technik ist eine Vielzahl von Welle-Nabe-Verbindung für verschiedenste Anwendungen bekannt. Als druckschriftlicher Stand der Technik werden die EP 2 058 542 A2, die EP 1 632 331 A1, die EP 2 287 484 A2, die DE 10 2016 211797 A1 sowie die DE 102 38 968 A1 genannt. Im Bereich von elektrischen Aktoren, wie beispielsweise elektrischen Bremskraftverstärkern, ist es insbesondere bekannt, eine als Spindel ausgebildete Welle an einem Ende mit einer als Platte ausgebildete Nabe zu verbinden, um so die Spindel gegenüber einem relativ zu der Spindel bewegten Maschinenelement zu fixieren. Die Verbindung der Spindel mit der Platte muss dementsprechend um die Spindellängsachse wirkende Drehmomente als auch entlang der Spindellängsachse wirkende Axialkräfte übertragen können. Mitunter besteht die Anforderung, dass entsprechende Welle-Nabe-Verbindungen nur einen begrenzten Bauraum beanspruchen dürfen.

Derartige Verbindungen wurden bislang mittels einer die Spindel mit der Platte verbindenden Schweißnaht realisiert. Eine derartige Verbindung setzt jedoch voraus, dass beide Teile werkstoffseitig schweißbar ausgebildet sind. Entsprechende Werkstoffe bzw. Oberflächen weisen jedoch Nachteile im Hinblick auf die Korrosionsbeständigkeit auf. Darüber hinaus müssen die Bauteile vor Anbringung der Schweißnaht von Ölrückständen befreit werden, da Ölrückstände die Eigenschaften der Schweißnaht im Allgemeinen negativ beeinflussen.

Der Erfindung liegt daher die Aufgabe zugrunde, eine zuverlässige und robuste Verbindung zwischen einer Welle und einer Nabe bereitzustellen, die einen geringen Bauraumbedarf aufweist und kostengünstig herstellbar ist. Der Erfindung liegt außerdem die Aufgabe zugrunde eine Welle sowie eine Nabe für eine derartige Verbindung bereitzustellen. Darüber hinaus liegt der Erfindung die Aufgabe zugrunde, einen qualitativ hochwertigen elektrischen Aktor bereitzustellen, der einen geringen Bauraumbedarf aufweist und kostengünstig herstellbar ist.

Die Aufgabe wird erfindungsgemäß gelöst durch eine Welle mit den Merkmalen des Patentanspruchs 1, eine Nabe mit den Merkmalen des Patentanspruchs 9, eine Welle-Nabe-Verbindung mit den Merkmalen des Patentanspruchs 13 sowie einen elektrischen Aktor mit den Merkmalen des Patentanspruchs 17.

Vorteilhafte Ausgestaltungen und Weiterbildungen der Erfindung sind in den abhängigen Ansprüchen angegeben.

Eine erfindungsgemäße Welle zur Übertragung eines Drehmoments und/oder einer Axialkraft umfasst eine Wellenlängsachse, eine Wellenmantelfläche und ein Wellenende. Die Wellenmantelfläche weist mindestens eine Ausnehmung mit einer axialen Ausnehmungswand und einer an die axiale Ausnehmungswand angrenzenden radialen Ausnehmungswand auf. Die axiale Ausnehmungswand kann sich insbesondere zur Übertragung von Axialkräften eignen. Die radiale Ausnehmungswand kann sich insbesondere zur Übertragung von um die Wellenlängsachse wirkenden Drehmomenten eignen. Die radiale Ausnehmungswand ist vorzugsweise parallel zur Wellenlängsachse angeordnet. Die axiale Ausnehmungswand wiederum ist vorzugsweise rechtwinklig zur radialen Ausnehmungswand angeordnet. Die radiale Ausnehmungswand grenzt vorzugsweise derart an die axiale Ausnehmungswand an, dass am Übergang von der radialen Ausnehmungswand zu der axialen Ausnehmungswand ein wellenseitiger Übergangsradius angeordnet ist, der insbesondere der Reduzierung von Kerbspannungen dienen kann.

Die radiale Ausnehmungswand weist ein erstes Wandende und ein zweites Wandende auf. Jedes der Wandenden ist vorzugsweise durch jeweils eine Schnittlinie der radialen Ausnehmungswand mit der Wellenmantelfläche gebildet.

In Richtung des Wellenendes ist die mindestens eine Ausnehmung axial geöffnet. Eine entsprechende axiale Öffnung ist damit vorzugsweise gegenüber der axialen Ausnehmungswand angeordnet. Somit weist die Welle axial aus Richtung des Wellenendes kommend vorzugsweise keinen Wellenabschnitt auf, der die mindestens eine Ausnehmung zumindest teilweise verdecken würde. Vorzugsweise kann damit eine Nabe mit einem in die mindestens eine Ausnehmung eingreifenden Element vom Wellenende her auf die Welle aufgeschoben werden bis das eingreifende Element an der axialen Ausnehmungswand anliegt.

Die Begriffe "axial" und "radial" beziehen sich vorzugsweise, sofern nicht anders angegeben, hier und im Folgenden auf die Wellenlängsachse und/oder die Nabenlängsachse.

Erfindungsgemäß weist die radiale Ausnehmungswand einen Ausnehmungsradius auf, derart dass die radiale Ausnehmungswand zumindest abschnittsweise eine konkave, von der Wellenlängsachse abgewandte Ausnehmungsbogenform aufweist. Dadurch kann die radiale Ausnehmungswand besonders vorteilhaft zur Übertragung von um die Wellenlängsachse wirkenden Drehmomenten geeignet sein. Durch die konkave von der Wellenlängsachse abgewandte Ausnehmungsbogenform ist die mindestens eine Ausnehmung aus Sicht der Wellenmantelfläche vorzugsweise muldenförmig ausgebildet. Insbesondere kann die radiale Ausnehmungswand durch die konkave Ausnehmungsbogenform zwischen dem ersten Wandende und dem zweiten Wandende von einer gedachten, das erste Wandende mit dem zweiten Wandende verbindenden Geraden abweichen. Die erfindungsgemäße Ausbildung der radialen Ausnehmungswand widerspricht vorzugsweise nicht einer Formgebung dergestalt, dass die radiale Ausnehmungswand abschnittsweise gerade ausgebildet ist. Beispielsweise kann die radiale Ausnehmungswand mehrere Geraden umfassen, die einen winkligen Versatz zueinander aufweisen und mittels eines bogenförmigen Abschnitts miteinander verbunden sein können. Der winklige Versatz kann dabei im Bereich zwischen 90° und 180° liegen.

In einer bevorzugten Ausführungsform der Erfindung erstreckt sich die Ausnehmungsbogenform der radialen Ausnehmungswand von dem ersten Wandende bis zu dem zweiten Wandende und/oder der Ausnehmungsradius ist variabel ausgebildet. Erstreckt sich die Ausnehmungsbogenform der radialen Ausnehmungswand von dem ersten Wandende bis zu dem zweiten Wandende, ist vorzugsweise die gesamte radiale Ausnehmungswand bogenförmig ausgebildet, sodass die radiale Ausnehmungswand in Richtung von dem ersten Wandende zu dem zweiten Wandende frei von einem geraden Abschnitt ist. Ist der Ausnehmungsradius variabel ausgebildet, ist der Ausnehmungsradius vorzugsweise nicht konstant. Die radiale Ausnehmungswand ist somit vorzugsweise nicht konstant gekrümmt. Durch die variable Ausbildung des Ausnehmungsradius kann die Übertragung von Drehmoment über die radiale Ausnehmungswand gleichmäßiger gestaltet und damit die Beanspruchung insbesondere der beteiligten Kontaktflächen reduziert werden. Besonders bevorzugt ist der Ausnehmungsradius größer als ein Außenradius der Welle ausgebildet.

Besonders bevorzugt entspricht die Ausnehmungsbogenform der radialen Ausnehmungswand zumindest einem Abschnitt einer Hypotrochoide. Dabei handelt es sich vorzugsweise um eine einfach und schnell herstellbare Kontur, die eine gleichmäßige Drehmomentübertragung ermöglichen kann. Unter einer Hypotrochoide wird hier und im Folgenden vorzugsweise eine Bahn verstanden, die ein an einem Kreis angeordneter Punkt beschreibt, wenn dieser Kreis in einem anderen Kreis, dem sogenannten Grundkreis, abrollt. Der betrachtete Punkt kann dabei außerhalb oder innerhalb des abrollenden Kreises liegen.

In Parameterdarstellung lässt sich die Hypotrochoide mit folgendem Formelsatz beschreiben:

$$x(\theta) = (R - r)\cos(\theta) + d\,\cos\left(\frac{R - r}{r}\theta\right)$$

$$y(\theta) = (R - r)\sin(\theta) - d\,\sin\left(\frac{R - r}{r}\theta\right)$$

Dabei ist R der Radius des Grundkreises, r der Radius des abrollenden Kreises und d der Abstand des Punktes von dem Mittelpunkt des abrollenden Kreises. Der Parameter d kann damit ein Maß für die Exzentrizität angesehen werden. Das Verhältnis R/r wird vorzugsweise so gewählt, dass es eine natürliche Zahl ergibt. Das Verhältnis kann insbesondere in diesem Fall die Anzahl der sogenannten Ecken der Hypotrochoide angeben. Vorzugsweise beträgt das Verhältnis R/r vorliegend mindestens 3. Besonders bevorzugt ist das Verhältnis R/r = 4.

Ein Hypotrochoidenmittelpunkt der Hypotrochoide ist vorzugsweise auf der Wellenlängsachse angeordnet. Das Verhältnis R/r entspricht damit vorzugsweise der Anzahl der Ausnehmungen. Die Ausnehmungen können damit gleichmäßig und symmetrisch über den Umfang der Welle verteilt sein. Die Welle kann derart ausgebildet sein, dass die Ecken der Hypotrochoide außerhalb der Welle angeordnet sind. Die Ecken sind in einer entsprechenden Ausführungsform der Erfindung damit nicht direkt in der Ausnehmungsbogenform abgebildet.

Erfindungsgemäß weist die Wellenmantelfläche eine Spindelverzahnung mit mindestens einem Spindelzahn auf. Vorzugsweise läuft der mindestens eine Spindelzahn schraubenförmig entlang der Wellenlängsachse um die Welle um. Die Welle kann somit als Spindel, beispielsweise eines Spindelantriebs, fungieren.

Die axiale Ausnehmungswand mindestens einer der mindestens einen Ausnehmung kann zumindest abschnittsweise von einer Schnittfläche des mindestens einen Spindelzahns gebildet sein. Der mindestens eine Spindelzahn kann auf diese Weise in der axialen Ausnehmungswand enden. So kann eine besonders günstige Übertragung einer Axialkraft zwischen der Welle und einem in der mindestens einen Ausnehmung angeordneten Elements erfolgen.

Die Schnittfläche des mindestens einen Spindelzahns ist vorzugsweise beabstandet zu dem ersten Wandende und/oder dem zweiten Wandende der radialen Ausnehmungswand angeordnet. Die Wandenden sind vorzugsweise an den Stellen gebildet, an denen die radiale Ausnehmungswand entlang der Ausnehmungsbogenform jeweils aus der Welle austritt. Die Anordnung der Schnittfläche richtet sich vorzugsweise insbesondere nach dem mittels der Welle übertragenen Drehmoment. Entlang radialen Ausnehmungswand erfolgt die Drehmomentübertragung in der Regel schwerpunktmäßig im Bereich zumindest eines der Wandenden. Insbesondere in Abhängigkeit von der Drehrichtung kann die Drehmomentübertragung vor allem im Bereich des ersten Wandendes oder des zweiten Wandendes erfolgen.

Die Übertragung von Axialkräften von der oder auf die Welle erfolgt, wie zuvor beschrieben, in der Regel zu einem Großteil über die Schnittfläche des mindestens einen Spindelzahns. Durch die Anordnung der Schnittfläche des mindestens einen Spindelzahns zu dem ersten Wandende und/oder dem zweiten Wandende kann die mechanische Beanspruchung der Welle im Bereich der Ausnehmung somit möglichst gleichmäßig verteilt werden. Aus der Praxis sind insbesondere drei Anwendungsfälle bekannt, an die die Welle durch die Anordnung der Schnittfläche des mindestens einen Spindelzahns relativ zu den Wandenden angepasst werden kann.

In einem ersten Anwendungsfall kann die Drehmomentübertragung, insbesondere bei Drehung der Welle, im Wesentlichen nur in einer ersten Drehrichtung und damit vor allem im Bereich des ersten Wandendes stattfinden. In diesem Fall wird vorzugsweise eine Ausführungsform der Welle verwendet, bei der die Schnittfläche des mindestens einen Spindelzahns beabstandet zu dem ersten Wandende und im Bereich des zweiten Wandendes angeordnet ist.

In einem zweiten Anwendungsfall kann die Drehmomentübertragung, insbesondere bei Drehung der Welle, im Wesentlichen nur in einer zweiten Drehrichtung und damit vor allem im Bereich des zweiten Wandendes stattfinden. In diesem Fall wird vorzugsweise eine Ausführungsform der Welle verwendet, bei der die Schnittfläche des mindestens einen Spindelzahns beabstandet zu dem zweiten Wandende und im Bereich des ersten Wandendes angeordnet ist.

In einem dritten Anwendungsfall kann die Drehmomentübertragung, insbesondere bei Drehung der Welle, in beiden Drehrichtungen und damit vor allem im Bereich des ersten Wandendes und des zweiten Wandendes stattfinden. In diesem Fall wird vorzugsweise eine Ausführungsform der Welle verwendet, bei der die Schnittfläche des mindestens einen Spindelzahns beabstandet zu dem ersten Wandende und zu dem zweiten Wandende angeordnet ist. Die Schnittfläche des mindestens einen Spindelzahns ist in diesem Fall vorzugsweise mittig zwischen dem ersten Wandende und dem zweiten Wandende angeordnet.

In einer bevorzugten Ausführungsform der Erfindung umfasst die mindestens eine Ausnehmung eine Mehrzahl von Ausnehmungen und der mindestens eine Spindelzahn eine Mehrzahl von Spindelzähnen, wobei die Anzahl der Ausnehmungen der Anzahl der Spindelzähne entspricht, und wobei die jeweilige axiale Ausnehmungswand jeder der Ausnehmungen zumindest abschnittsweise von der Schnittfläche einer der Spindelzähne gebildet ist. Dadurch kann die Übertragung von Drehmomenten und/oder Axialkräften gleichmäßig über den Umfang der Welle verteilt werden. Besonders bevorzugt weist die Welle vier Spindelzähne und vier Ausnehmungen auf, die über den Umfang der Welle vorzugsweise gleichmäßig verteilt sind.

Zwischen der axialen Ausnehmungswand und dem Wellenende ist vorzugsweise ein Rand angeordnet. Der Rand kann nach Anordnen eines Elements in der mindestens einen Ausnehmung umgeformt werden und das Element so in axialer Richtung sichern. Vorzugsweise ist der Rand ringförmig, insbesondere kreisringförmig, ausgebildet. Entlang seines Umfangs ist der Rand vorzugsweise frei von Unterbrechungen. Besonders bevorzugt weist die Welle eine Zentralbohrung entlang der Wellenlängsachse auf. Der Rand kann somit durch einen zusätzlichen Absatz in der Wellenmantelfläche gebildet sein. Besonders bevorzugt ist ein Außendurchmesser des Randes kleiner als ein maximaler Außendurchmesser der Welle. Dadurch kann die Welle einfach und günstig aus Stangenmaterial hergestellt werden. Vorzugsweise ist das Wellenende von einer freien Stirnfläche des Randes gebildet. Der Rand kann von der mindestens einen Ausnehmung geschnitten sein.

Eine erfindungsgemäße Nabe umfasst eine Nabenlängsachse, eine sich entlang der Nabenlängsachse erstreckende Nabenöffnung, und einer die Nabenöffnung radial begrenzenden Innenwand. Die Innenwand weist mindestens einen Nabenbogenabschnitt mit einem Nabenbogenradius auf, derart dass der mindestens eine Nabenbogenabschnitt eine konvexe, der Nabenlängsachse zugewandte Nabenbogenform aufweist. Dadurch kann eine besonders gleichmäßige Drehmomentübertragung auf ein in der Nabenöffnung angeordnetes Element erfolgen. Durch die konvexe, der Nabenlängsachse zugewandte Nabenbogenform ist der mindestens eine Nabenbogenabschnitt aus Sicht der Nabenlängsachse vorzugsweise bauchig ausgebildet. Die Nabenöffnung ist vorzugsweise in einer Ebene orthogonal zur Nabenlängsachse vollständig umschlossen. Die Nabe ist vorzugsweise plattenförmig ausgebildet.

Besonders bevorzugt ist der Nabenbogenradius konstant ausgebildet. Dadurch kann der Nabenbogenradius, insbesondere im Stanzverfahren, besonders einfach hergestellt werden. Alternativ kann der Nabenbogenradius variabel ausgebildet sein. Insbesondere kann die Nabenbogenform des mindestens einen Nabenbogenabschnitts zumindest einem Abschnitt einer Hypotrochoide entsprechend. Die Nabenbogenform kann insbesondere der Ausnehmungsbogenform der oben beschriebenen Nabe entsprechen. Dadurch kann das Anordnen der Nabe auf der Welle besonders leicht möglich sein. Die Nabenbogenform kann darüber hinaus beispielsweise mehrere Geraden umfassen, die einen winkligen Versatz zueinander aufweisen und mittels eines bogenförmigen Abschnitts miteinander verbunden sein können. Der winklige Versatz kann dabei im Bereich zwischen 90° und 180° liegen.

Der mindestens eine Nabenbogenabschnitt weist erfindungsgemäß ein erstes Nabenbogenende und ein zweites Nabenbogenende auf, wobei jedes der Nabenbogenenden an jeweils einen Freistich angrenzt. Dadurch kann ein definiertes Anliegen des mindestens einen Nabenbogenabschnitts an einem in der Nabenöffnung angeordneten Element erreicht werden. Die Freistiche können jeweils durch eine Freistichbohrung gebildet sein. Die Freistichbohrungen sind vorzugsweise von der Nabenöffnung umfasst und können jeweils konkav zur Nabenlängsachse hin orientiert sein. Ein Freistichradius jeder der Freistiche ist vorzugsweise deutlich kleiner als der Nabenbogenradius.

Der mindestens eine Nabenbogenabschnitt kann an dem ersten Nabenbogenende einen tangentenstetigen Übergang zu dem an das erste Nabenbogenende angrenzenden Freistich und/oder an dem zweiten Nabenbogenende einen tangentenstetigen Übergang zu dem an das zweite Nabenbogenende angrenzenden Freistich aufweisen. Mittels des tangentenstetigen Übergangs kann eine besonders große Auflagefläche an einem in der Nabenbohrung angeordneten Element erreicht werden. Der tangentenstetige Übergang ist vorzugsweise derart ausgebildet, dass an dem Übergang des jeweiligen Nabenbogenendes zu dem angrenzenden Freistich die an den Nabenbogenabschnitt und an den Freistich angelegten Tangenten die gleiche Steigung aufweisen. Anders ausgedrückt ist vorzugsweise die Kontur der Nabenöffnung an dem Übergang des mindestens einen Nabenbogenabschnitt zu dem entsprechenden Freistich stetig differenzierbar.

Bei der Übertragung eines um die Nabenlängsachse wirkenden Drehmoments auf ein oder von einem in der Nabenöffnung angeordneten Element können die höchsten Belastungen im Bereich des ersten Nabenbogenendes bzw. des zweiten Nabenbogenendes auftreten, sodass die Drehmomentübertragung vor allem in diesen Bereichen stattfindet. Durch den tangentenstetigen Übergang kann die Belastung auf eine relativ große Fläche verteilt werden, sodass die Beanspruchung der Nabe gering gehalten werden kann. Durch die Auswahl, welches der Nabenbogenenden zu dem entsprechend angrenzenden Freistich einen tangentenstetigen Übergang aufweist, kann die Nabe an verschiedene Anwendungsfälle angepasst werden. Entsprechend den zuvor bezüglich der Welle beschriebenen Anwendungsfälle sind bezüglich der Nabe im Wesentlichen drei Anwendungsfälle bekannt, an die die Welle durch die Anordnung der Schnittfläche des mindestens einen Spindelzahns relativ zu den Wandenden angepasst werden kann.

In einem ersten Anwendungsfall kann die Drehmomentübertragung im Wesentlichen nur in einer ersten Drehrichtung und damit vor allem im Bereich des ersten Nabenbogenendes stattfinden. In diesem Fall wird vorzugsweise eine Ausführungsform der Nabe verwendet, bei dem das erste Nabenbogenende einen tangentenstetiger Übergang zu dem an das erste Nabenbogenende angrenzenden Freistich aufweist.

In einem zweiten Anwendungsfall kann die Drehmomentübertragung im Wesentlichen nur in einer zweiten Drehrichtung und damit vor allem im Bereich des zweiten Nabenbogenendes stattfinden. In diesem Fall wird vorzugsweise eine Ausführungsform der Nabe verwendet, bei dem das zweite Nabenbogenende einen tangentenstetiger Übergang zu dem an das zweite Nabenbogenende angrenzenden Freistich aufweist.

In einem dritten Anwendungsfall kann die Drehmomentübertragung in beiden Drehrichtungen und damit vor allem im Bereich des ersten Nabenbogenendes und des zweiten Nabenbogenendes stattfinden. In diesem Fall kann eine Ausführungsform der Nabe verwendet werden, bei dem das erste Nabenbogenende einen tangentenstetiger Übergang zu dem an das erste Nabenbogenende angrenzenden Freistich aufweist und bei dem das zweite Nabenbogenende einen tangentenstetiger Übergang zu dem an das zweite Nabenbogenende angrenzenden Freistich aufweist.

Alternativ kann der Freistichradius kleiner gewählt sein und/oder die Freistiche weiter von der Nabenlängsachse entfernt angeordnet sein, um den mindestens einen Nabenbogenabschnitt in Richtung des ersten Nabenbogenendes und in Richtung des zweiten Nabenbogenendes zu verlängern und so eine gleichmäßigere Belastung der Verteilung zu erreichen.

Vorzugsweise umfasst der mindestens eine Nabenbogenabschnitt eine Mehrzahl an Nabenbogenabschnitten, die gleichmäßig in einer Umfangsrichtung der Nabenöffnung um die Nabenlängsachse angeordnet sind. Dadurch kann die Belastung der Nabe, insbesondere bei der Übertragung eines Drehmoments, gleichmäßig um die Nabenlängsachse verteilt werden. Vorzugsweise sind die Nabenbogenabschnitte dabei gleichartig ausgebildet. Bei einer Anzahl von drei oder mehr Nabenbogenabschnitten kann die Nabenöffnung damit die Form eines Polygons mit Freistichen an jeder der Ecken aufweisen. Besonders bevorzugt weist die Nabe vier Nabenbogenabschnitte auf.

Eine erfindungsgemäße Welle-Nabe-Verbindung umfasst eine zuvor beschriebene Welle sowie eine zuvor beschriebene Nabe. Dabei ist die Nabe derart auf der Welle angeordnet ist, dass

- der mindestens eine Nabenbogenabschnitt in der mindestens einen Ausnehmung angeordnet ist,
- die Innenwand der Nabenöffnung im Bereich des mindestens einen Nabenbogenabschnitts der radialen Ausnehmungswand der mindestens einen Ausnehmung zugewandt angeordnet ist, und
- eine erste Seitenfläche der Nabe mit der axialen Ausnehmungswand der mindestens einen Ausnehmung in Wirkverbindung steht.

Damit kann der mindestens eine Nabenbogenabschnitt ein in der mindestens einen Ausnehmung angeordnetes Element bilden. Ebenso kann die Welle ein in der Nabenöffnung angeordnetes Element bilden.

Vorzugsweise ist die Nabe derart auf der Welle angeordnet, dass die Nabenlängsachse entlang der Wellenlängsachse ausgerichtet und auf der Wellenlängsachse angeordnet ist. Zwischen der Innenwand der Nabenöffnung und der radialen Ausnehmungswand kann eine Wirkverbindung bestehen, insbesondere derart, dass die Innenwand und die radiale Ausnehmungswand zumindest abschnittsweise aneinander anliegen. Damit kann eine Kraft bzw. ein Drehmoment zwischen der Innenwand und der radialen Ausnehmungswand übertragen werden.

Die Wirkverbindung der ersten Seitenfläche der Nabe mit der axialen Ausnehmungswand der mindestens einen Ausnehmung dient der axialen Sicherung der Nabe auf der Welle. Vorzugsweise ist diese Wirkverbindung derart ausgebildet, dass die erste Seitenfläche direkt an der axialen Ausnehmungswand anliegt.

Die Nabe weist neben der ersten Seitenfläche vorzugsweise eine, besonders bevorzugt der ersten Seitenfläche gegenüberliegende, zweite Seitenfläche auf. Die Seitenflächen können jeweils durch stirnseitig an die Innenwand angrenzenden Flächen der Nabe gebildet sein. Durch die stirnseitige Anordnung sind die erste Seitenfläche und die zweite Seitenfläche vorzugsweise im Wesentlichen orthogonal zu der Nabenlängsachse ausgerichtet. Die Kante zwischen der Innenwand und der ersten Seitenfläche kann einen nabenseitigen Übergangsradius aufweisen, der vorzugsweise dem wellenseitigen Übergangsradius entspricht. Dadurch kann eine einfachere Montierbarkeit der Nabe auf der Welle erreicht werden.

Der mindestens eine Nabenbogenabschnitt entspricht vorzugsweise in Anzahl und Anordnung der mindestens einen Ausnehmung. Vorzugsweise weist damit die Nabe die gleiche Anzahl an Nabenbogenabschnitten auf wie die Welle an Ausnehmungen. Durch die der Anordnung der Ausnehmungen entsprechende Anordnung der Nabenbogenabschnitte kann in jeder der Ausnehmungen genau ein Nabenbogenabschnitt angeordnet sein. Besonders bevorzugt weist die Welle vier Ausnehmungen und die Nabe vier Nabenbogenabschnitte auf.

In einer bevorzugten Ausführungsform der Welle-Nabe-Verbindung weist die Welle im Bereich des ersten Nabenbogenendes und im Bereich des zweiten Nabenbogenendes der mindestens einen Ausnehmung gegenüber der Nabe ein Übermaß auf, und die die Welle weist in einem zentralen, zwischen dem ersten Nabenbogenende und dem zweiten Nabenbogenende angeordneten Bereich des mindestens einen Nabenbogenabschnitts ein Spiel auf. Dadurch kann eine spielfreie Verbindung zwischen der Naben und der Welle erreicht werden, insbesondere an den Stellen wo ein wesentlicher Anteil der Drehmomentübertragung stattfindet, und gleichzeitig die erforderliche Montagekraft gering gehalten werden.

In einer alternativen Ausführungsform kann die Welle-Nabe-Verbindung derart ausgebildet sein, dass die Welle im Bereich des ersten Nabenbogenendes und im Bereich des zweiten Nabenbogenendes der mindestens einen Ausnehmung gegenüber der Nabe ein Spiel aufweist, und dass die Welle in einem zentralen, zwischen dem ersten Nabenbogenende und dem zweiten Nabenbogenende angeordneten Bereich des mindestens einen Nabenbogenabschnitts ein Übermaß gegenüber der Nabe aufweist.

Vorzugsweise ist die Welle-Nabe-Verbindung derart ausgebildet, dass der Rand der Welle radial nach außen und axial in Richtung der Nabe umgeformt, vorzugsweise umgebördelt, ist, und die der ersten Seitenfläche gegenüber angeordnete zweite Seitenfläche der Nabe mit dem umgeformten Rand in Wirkverbindung steht. Dadurch kann eine Sicherung der Nabe auf der Welle in beide axiale Richtungen realisiert werden. Die Wirkverbindung zwischen der zweiten Seitenfläche und dem umgeformten Rand ist vorzugsweise derart ausgebildet, dass der umgeformte Rand, besonders bevorzugt unmittelbar, an der zweiten Seitenfläche anliegt.

Ein Verfahren zur Herstellung einer Welle-Nabe-Verbindung mit umgeformten Rand kann die folgenden Schritte umfassen:

- Bereitstellen einer zuvor beschriebenen Welle, die den zuvor beschriebenen Rand aufweist,

- Bereitstellen einer zuvor beschriebenen Nabe,

- Anordnen der Nabe auf der Welle, derart dass

  ○ oder mindestens eine Nabenbogenabschnitt in der mindestens einen Ausnehmung angeordnet ist,
  ○ die Innenwand der Nabenöffnung im Bereich des mindestens einen Nabenbogenabschnitts der radialen Ausnehmungswand der mindestens einen Ausnehmung zugewandt angeordnet ist, und
  ○ eine erste Seitenfläche der Nabe mit der axialen Ausnehmungswand der mindestens einen Ausnehmung in Wirkverbindung steht,

- Umformen des axial über die Nabe hinausragenden Randes radial nach außen und axial in Richtung der Nabe, insbesondere durch Umbördeln, insbesondere durch ein Taumelverfahren oder ein Rollierverfahren,

- Beenden des Umformens, sobald der Rand an der zweiten Seitenfläche anliegt.

Durch das Umformen des axial über die Nabe hinausragenden Randes radial nach außen und axial in Richtung der Nabe kann der zwischen der Innenwand der Nabe und der Welle angeordnete, luftgefüllte Raum zumindest teilweise mit dem Werkstoff der Welle aufgefüllt werden. Dadurch kann die Verbindung zwischen der Welle und der Nabe verbessert werden. Durch Anwendung eines Taumelverfahrens oder eines Rollierverfahrens kann der Umformungsprozess mit einer geringen Fertigungsdauer realisiert werden. Vorzugsweise wird das Umformen beendet unmittelbar nachdem der Rand an der zweiten Seitenfläche anliegt, da bei einem Fortsetzen des Umformungsvorgangs die Festigkeit des umgeformten Randes abnehmen kann.

Ein erfindungsgemäßer elektrischer Aktuator umfasst eine zuvor beschriebene Welle-Nabe-Verbindung. Der elektrische Aktuator kann beispielsweise als elektrischer Bremskraftverstärker, insbesondere für ein Fahrzeug, ausgebildet sein. Derartige Bremskraftverstärker kommen insbesondere in elektrisch angetriebenen Fahrzeugen, wie beispielsweise Elektroautos, zum Einsatz.

Ein Ausführungsbeispiel der Erfindung wird anhand der nachfolgenden Figuren erläutert. Es zeigt:

Figur 1a    eine erste perspektivische Darstellung eines ersten Ausführungsbeispiels einer Welle,

Figur 1b    eine zweite perspektivische Darstellung des in Fig. 1 gezeigten Ausführungsbeispiels,

Figur 2a    eine Draufsicht eines zweiten Ausführungsbeispiels einer Welle,

Figur 2b    eine erste Seitenansicht des in Fig. 2a gezeigte Ausführungsbeispiels,

Figur 2c    eine zweite Seitenansicht des in Fig. 2a gezeigte Ausführungsbeispiels,

Figur 3    eine Draufsicht eines dritten Ausführungsbeispiels einer Welle,

Figur 4    eine Draufsicht eines vierten Ausführungsbeispiels einer Welle,

Figur 5a    eine perspektivische Darstellung eines ersten Ausführungsbeispiels einer Nabe,

Figur 5b    eine Draufsicht auf das in Fig. 5a gezeigte Ausführungsbeispiel mit eingezeichneter Schnittebene A-A,

Figur 5c    die in Fig. 5b eingezeichnete Schnittansicht A-A des in Fig. 5a gezeigten Ausführungsbeispiels,

Figur 6    eine Draufsicht auf ein zweites Ausführungsbeispiel einer Nabe,

Figur 7    eine Draufsicht auf ein drittes Ausführungsbeispiel einer Nabe,

Figur 8a    eine erste perspektivische Darstellung eines Ausführungsbeispiels einer Welle-Nabe-Verbindung,

Figur 8b    eine zweite perspektivische Darstellung des in Fig. 8a gezeigten Ausführungsbeispiels,

Figur 8c    eine Seitenansicht des in Fig. 8a gezeigten Ausführungsbeispiels,

Figur 8d    eine Draufsicht des in Fig. 8a gezeigten Ausführungsbeispiels mit eingezeichneten Schnittebenen A-A, B-B und C-C,

Figur 8e    einen Ausschnitt der in Fig. 8d eingezeichneten Schnittansicht A-A des in Fig. 8a gezeigten Ausführungsbeispiels mit markiertem Detail Y,

Figur 8f    eine vergrößerte Darstellung des in Fig. 8e eingezeichneten Details Y,

Figur 8g    einen Ausschnitt der in Fig. 8d eingezeichneten Schnittansicht B-B des in Fig. 8a gezeigten Ausführungsbeispiels,

Figur 8h    einen Ausschnitt der in Fig. 8d eingezeichneten Schnittansicht C-C des in Fig. 8a gezeigten Ausführungsbeispiels mit markiertem Detail Z,

Figur 8i    eine vergrößerte Darstellung des in Fig. 8h eingezeichneten Details Z.

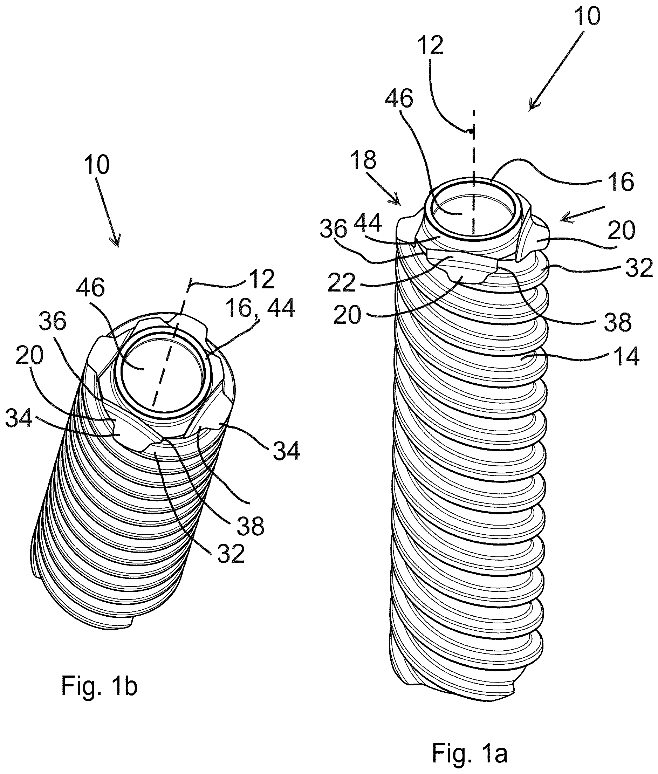

Die Figuren 1a bis 8i zeigen verschiedene Ansichten verschiedener Ausführungsbeispiele. Für gleiche und funktionsgleiche Teile werden die gleichen Bezugszeichen verwendet. Der Übersichtlichkeit halber werden nicht alle Bezugszeichen in jeder Figur verwendet.

Fig. 1a u. 1b zeigen ein erstes Ausführungsbeispiel einer Welle 10 zur Übertragung eines Drehmoments und/oder einer Axialkraft. Die Welle 10 umfasst eine Wellenlängsachse 12, eine Wellenmantelfläche 14 und ein Wellenende 16. Die Wellenmantelfläche 14 weist vier Ausnehmungen 18 auf. Jede der Ausnehmungen 18 weist eine axiale Ausnehmungswand 20 und eine an die axiale Ausnehmungswand 20 angrenzende radiale Ausnehmungswand 22 auf, wobei die radiale Ausnehmungswand 22 jeweils ein erstes Wandende 36 und ein zweites Wandende 38 aufweist. Während die axiale Ausnehmungswand 20 sich insbesondere zur Übertragung von Axialkräften eignet, ist die radiale Ausnehmungswand 22 insbesondere zur Übertragung von um die Wellenlängsachse 12 wirkenden Drehmomenten vorgesehen.

Jede der radialen Ausnehmungswände 22 ist parallel zur Wellenlängsachse 12 angeordnet. Die axialen Ausnehmungswände 20 sind wiederum rechtwinklig zur der entsprechenden radialen Ausnehmungswand 22 angeordnet. Die radialen Ausnehmungswände 22 grenzen dabei derart an die entsprechenden axialen Ausnehmungswände 20 an, dass am Übergang von jeder der radialen Ausnehmungswände 22 zu der entsprechenden axialen Ausnehmungswand 20 ein wellenseitiger Übergangsradius 24 angeordnet ist, der insbesondere der Reduzierung von Kerbspannungen dienen kann.

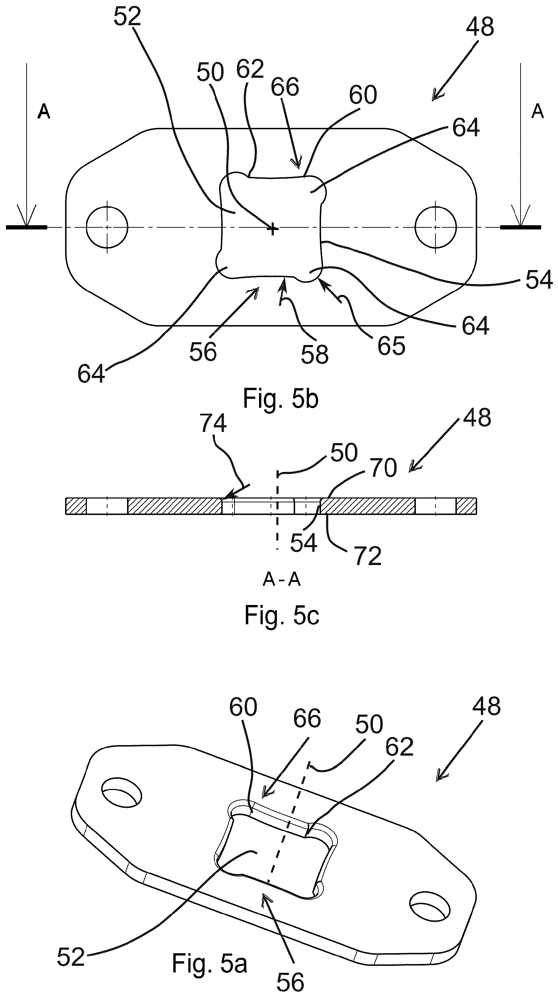

In Richtung des Wellenendes 16 ist jede der Ausnehmungen 18 axial geöffnet. Die Welle 10 weist axial aus Richtung des Wellenendes 16 kommend keinen Wellenabschnitt auf, der die Ausnehmungen 18 auch nur teilweise verdecken würde (siehe insbesondere Fig. 1b). Vorzugsweise kann damit eine in Fig. 5a bis Fig. 7 dargestellte Nabe 48 vom Wellenende 16 her auf die Welle 10 aufgeschoben werden, bis die Nabe 48 jeweils an der axialen Ausnehmungswand 20 anliegt.

Jede der radialen Ausnehmungswände 22 weist einen Ausnehmungsradius 28 auf, derart dass jede der radialen Ausnehmungswände 22 eine konkave, von der Wellenlängsachse 12 abgewandte Ausnehmungsbogenform aufweist. Durch die konkave von der Wellenlängsachse 12 abgewandte Ausnehmungsbogenform ist sind die Ausnehmungen 18 aus Sicht der Wellenmantelfläche 14 muldenförmig ausgebildet.

Der Ausnehmungsradius 28 ist jeweils derart variabel ausgebildet, dass sich die Ausnehmungsbogenform der radialen Ausnehmungswand 22 von dem ersten Wandende 36 bis zu dem zweiten Wandende 38 erstreckt und der Ausnehmungsradius 28 variabel ausgebildet ist. Der Ausnehmungsradius 28 ist dabei derart variabel ausgebildet, dass die Ausnehmungsbogenform der radialen Ausnehmungswände 22 jeweils einem Abschnitt einer Hypotrochoide entspricht. Die Ausnehmungsbogenformen aller Ausnehmungen 18 der Welle 10 entsprechen dabei Abschnitten einer einzigen gedachten Hypotrochoide. Dies gilt für jedes der gezeigten Ausführungsbeispiele. Ein gedachter Hypotrochoidenmittelpunkt der Hypotrochoide ist dabei auf der Wellenlängsachse 12 angeordnet. Die Ausnehmungen 18 können damit gleichmäßig und symmetrisch über den Umfang der Welle 10 verteilt sein. Die Welle 10 ist derart ausgebildet, dass die Ecken der Hypotrochoide außerhalb der Wellenmantelfläche 14 der Welle 10 angeordnet sind, sodass die Ecken nicht direkt in der Ausnehmungsbogenform abgebildet sind. Die Anzahl der Ecken entspricht jedoch der Anzahl der Ausnehmungen 18 der Welle 10. In den in Fig. 1a bis Fig. 7 gezeigten Ausführungsbeispielen liegen dementsprechend Hypotrochoiden mit vier Ecken zugrunde.

In jedem der in den Fig. 1a bis Fig. 7 gezeigten Ausführungsbeispielen weist die Wellenmantelfläche 14 eine Spindelverzahnung mit vier Spindelzähnen 32 auf. Die Spindelzähne 32 laufen schraubenförmig entlang der Wellenlängsachse 12 um die Welle 10 um.

Insbesondere die Ansichten in Fig. 1b u. 2c veranschaulichen, dass jede der axialen Ausnehmungswände 20 zumindest abschnittsweise von einer Schnittfläche 34 jeweils einer der Spindelzähne 32 gebildet ist. Jeder der Spindelzähne endet damit in einer der axialen Ausnehmungswände 20. Die Anzahl der Ausnehmungen 18 entspricht damit der Anzahl der Spindelzähne 34.

Die Wandenden 36 ,38 sind vorzugsweise an den Stellen gebildet, an denen die jeweilige radiale Ausnehmungswand 22 entlang der Ausnehmungsbogenform jeweils aus der Welle 10 austritt. In den in Fig. 1a bis 2c gezeigten Ausführungsbeispielen ist die Schnittfläche 34 des jeweiligen Spindelzahns 32 beabstandet zu dem ersten Wandende 36 und im Bereich des zweiten Wandendes 38 angeordnet. Die in Fig. 1a bis 2c gezeigten Ausführungsbeispiele sind damit auf einen ersten Anwendungsfall hin optimiert, in dem die Drehmomentübertragung im Wesentlichen nur in einer ersten Drehrichtung 40 und damit vor allem im Bereich des ersten Wandendes 36 stattfindet.

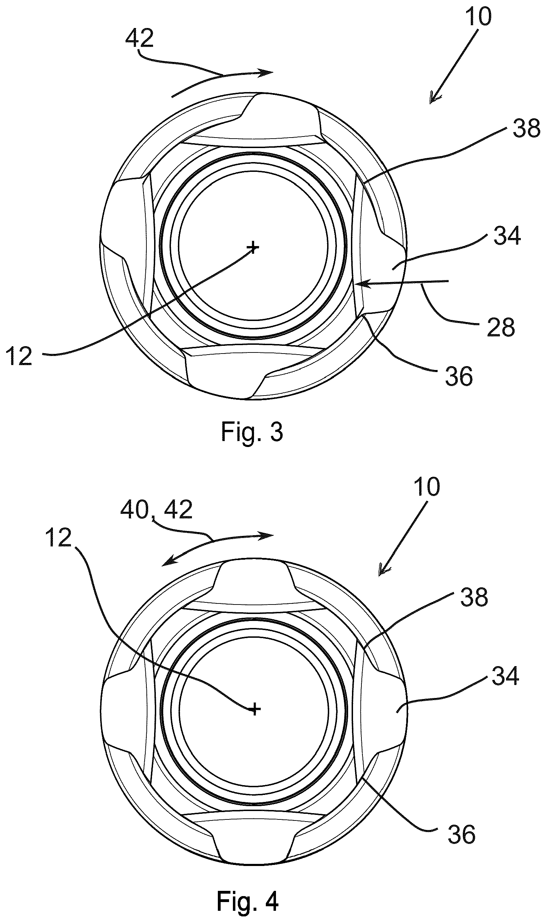

Das in Fig. 3 gezeigte Ausführungsbeispiel der Welle 10 ist hingegen auf einen zweiten Anwendungsfall hin optimiert, bei dem die Drehmomentübertragung im Wesentlichen vor allem im Bereich des zweiten Wandendes 38 stattfinden. Dies kann beispielsweise der Fall sein, wenn eine Drehmomentübertragung im Wesentlichen in einer zweiten Drehrichtung 42 erfolgt. Dabei sind die Schnittflächen 34 der Spindelzähne 32 jeweils beabstandet zu dem jeweiligen zweiten Wandende 38 und im Bereich des jeweiligen ersten Wandendes 36 angeordnet.

In einem dritten Anwendungsfall, für den das in Fig. 4 gezeigte Ausführungsbeispiel der Welle 10 vorgesehen ist, kann die Drehmomentübertragung in beiden Drehrichtungen und damit vor allem im Bereich des jeweiligen ersten Wandendes 36 und des jeweiligen zweiten Wandendes 38 stattfinden. Die Schnittflächen 34 der Spindelzähne sind dementsprechend beabstandet zu dem jeweiligen ersten Wandende 36 und zu dem jeweiligen zweiten Wandende 38 und damit mittig zwischen dem jeweiligen ersten Wandende 36 und dem jeweiligen zweiten Wandende 38 angeordnet.

Durch die beschriebenen Anordnungen der Schnittflächen 34 in den unterschiedlichen Ausführungsbeispielen kann die mechanische Beanspruchung der Welle 10 im Bereich der Ausnehmungen 18 möglichst gleichmäßig verteilt werden.

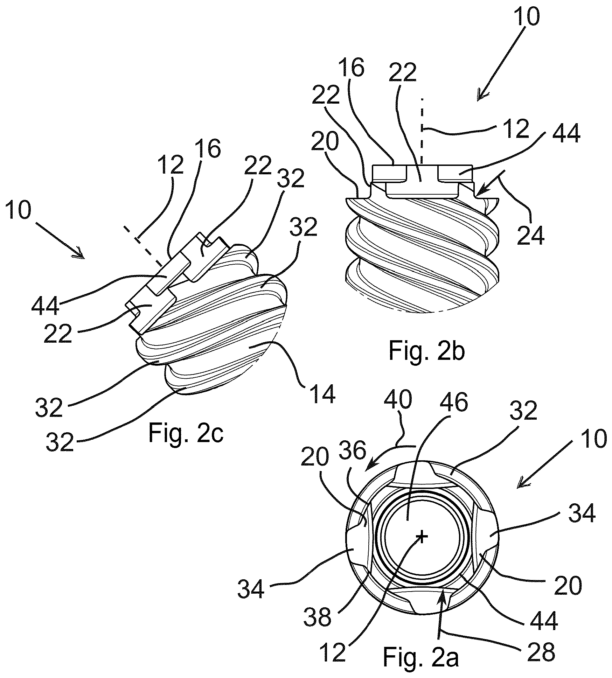

Wie insbesondere in den Fig. 1a u. 2b gut erkennbar ist, ist zwischen den axialen Ausnehmungswänden 20 und dem Wellenende 16 ein Rand 44 angeordnet. Die Welle 10 weist eine Zentralbohrung 46 entlang der Wellenlängsachse 12 auf. Der Rand 44 ist durch einen zusätzlichen Absatz in der Wellenmantelfläche 14 gebildet, sodass der Rand 44 kreisringförmig und unterbrechungsfrei ausgebildet ist. Das Wellenende 16 ist von einer freien Stirnfläche des Randes 44 gebildet. Das in den Fig. 2a bis Fig. 2c gezeigte Ausführungsbeispiel unterscheidet sich von dem in den Fig. 1a bis Fig. 1b gezeigten Ausführungsbeispiel darin, dass der Rand 44 kann von den Ausnehmungen 18 geschnitten ist.

Die Fig. 5a bis 5c zeigen ein erstes Ausführungsbeispiel einer Nabe 48. Die Nabe 48 umfasst eine Nabenlängsachse 50, eine sich entlang der Nabenlängsachse 50 erstreckende Nabenöffnung 52, und eine die Nabenöffnung 52 radial begrenzende Innenwand 54. Die Innenwand weist vier Nabenbogenabschnitte 56 mit jeweils einem konstanten Nabenbogenradius 58 auf, derart dass jeder der Nabenbogenabschnitte 56 eine konvexe, der Nabenlängsachse 50 zugewandte Nabenbogenform aufweist. Durch die konvexe, der Nabenlängsachse 50 zugewandte Nabenbogenform ist jeder der Nabenbogenabschnitte 56 aus Sicht der Nabenlängsachse 50 bauchig ausgebildet. Die Nabenöffnung 52 ist in einer Ebene orthogonal zur Nabenlängsachse 50 vollständig umschlossen. Die Nabe 48 ist plattenförmig ausgebildet.

Jeder der Nabenbogenabschnitte 56 weist ein erstes Nabenbogenende 60 und ein zweites Nabenbogenende 62 auf, wobei jedes der Nabenbogenenden 60, 62 an jeweils einen Freistich 64 angrenzt, wobei jeder der Freistiche 64 durch eine Freistichbohrung gebildet ist. Die unterschiedlichen Nabenbohrungsenden 60, 62 der in Umfangsrichtung um die Nabenlängsachse 50 aufeinander folgenden Nabenbogenabschnitte 56 grenzen dabei jeweils an denselben Freistich 64 an. Die Freistiche 64 sind jeweils konkav zur Nabenlängsachse 12 hin orientiert. Ein Freistichradius 65 jeder der Freistiche 64 ist vorzugsweise deutlich kleiner als der jeweilige Nabenbogenradius 58.

Die Nabenbogenabschnitte 56 der in den Fig. 5a bis Fig. 7 gezeigten Ausführungsbeispiele sind gleichmäßig in einer Umfangsrichtung der Nabenöffnung 52 um die Nabenlängsachse 50 angeordnet und gleichartig ausgebildet. Damit ergibt sich jeweils die Form eines Vierecks mit Freistichen 65 an jeder der Ecken.

Wie insbesondere aus Fig. 5b erkennbar ist, weist jeder der Nabenbogenabschnitte 56 an dem ersten Nabenbogenende 60 einen tangentenstetigen Übergang 66 zu dem an das jeweilige erste Nabenbogenende 60 angrenzenden Freistich 64 auf.

Entsprechend den zuvor bezüglich der Welle 10 beschriebenen Anwendungsfälle kann durch die Auswahl, welches der Nabenbogenenden 60, 62 zu dem entsprechend angrenzenden Freistich 64 einen tangentenstetigen Übergang 66 aufweist, die Nabe 48 an verschiedene Anwendungsfälle angepasst werden. Das in Fig. 5a bis Fig. 5c gezeigte Ausführungsbeispiel der Nabe 48 ist auf einen ersten Anwendungsfall hin optimiert, in dem die Drehmomentübertragung im Wesentlichen nur in einer ersten Drehrichtung 40 und damit vor allem im Bereich der ersten Nabenbogenenden 60 stattfindet.

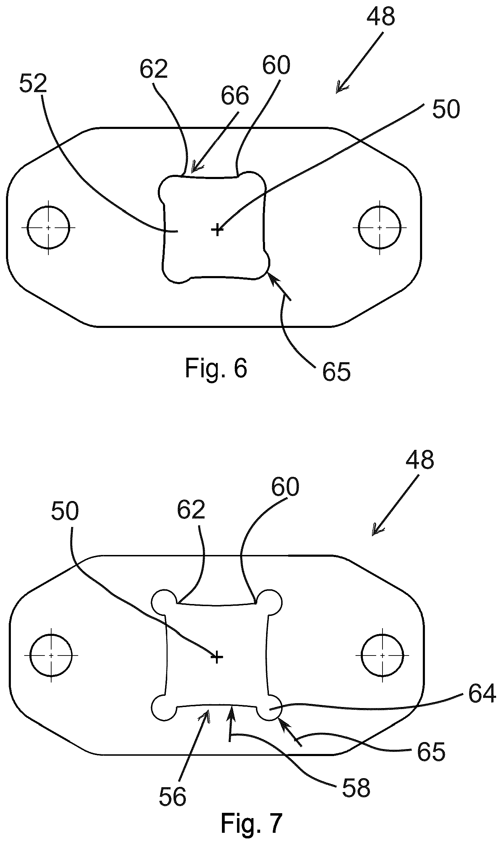

Fig. 6 zeigt ein Ausführungsbeispiel der Nabe 48, die für einen zweiten Anwendungsfall vorgesehen ist, in dem die Drehmomentübertragung im Wesentlichen nur in einer zweiten Drehrichtung 42 und damit vor allem im Bereich der zweiten Nabenbogenenden 62 stattfindet. Dabei weist jedes der zweiten Nabenbogenenden 62 einen tangentenstetige Übergang 66 zu dem jeweils angrenzenden Freistich 64 auf.

Das in Fig. 7 gezeigte Ausführungsbeispiel der Nabe 10 ist auf einen dritten Anwendungsfall hin ausgebildet, in dem die Drehmomentübertragung in beiden Drehrichtungen 40, 42 und damit vor allem im Bereich der ersten Nabenbogenenden 60 und der zweiten Nabenbogenenden 62 stattfindet. Dabei ist der Freistichradius 65 kleiner gewählt und die Freistiche 64 sind weiter von der Nabenlängsachse 50 entfernt angeordnet als bei den in Fig. 5a bis Fig. 6 gezeigten Ausführungsbeispielen.

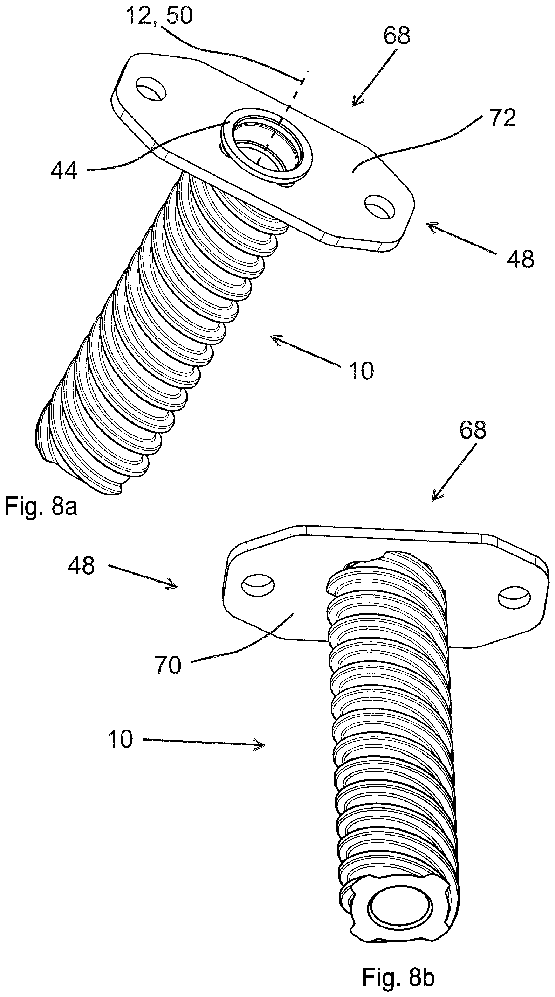

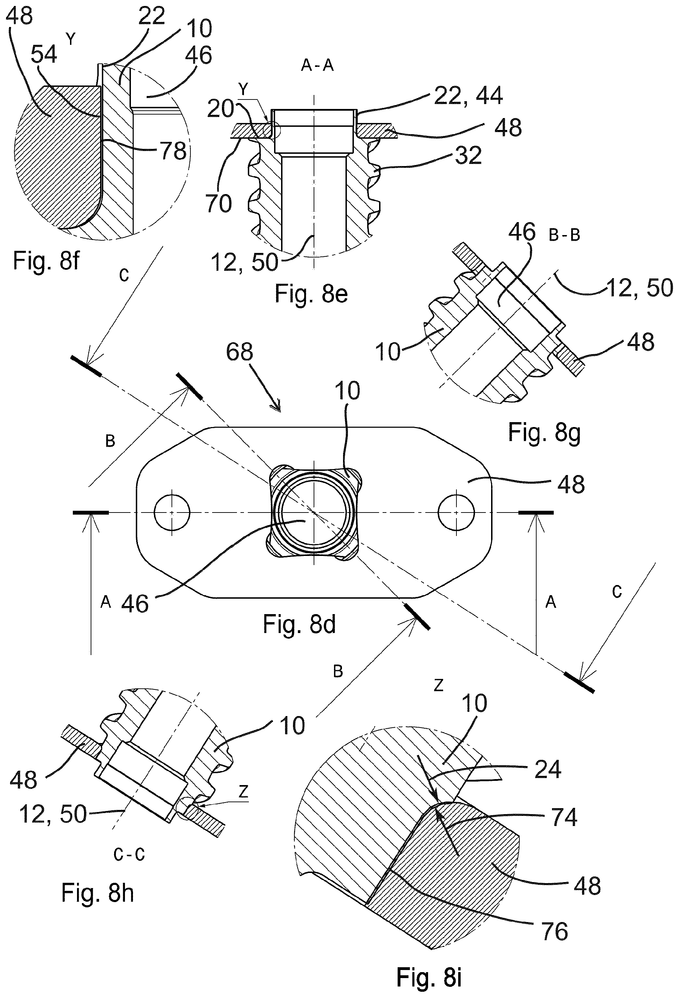

Die Fig. 8a bis 8i zeigen eine Welle-Nabe-Verbindung 68 umfassend die in Fig. 2a bis 2b gezeigte Welle 10 und die in Fig. 5a bis 5c gezeigte Nabe 48. Wie weiter auch aus den Fig. 2a u. 2b sowie den Fig. 5a bis 5c ersichtlich ist, weist die Nabe 48 die gleiche Anzahl an Nabenbogenabschnitten 56 auf wie die Welle 10 an Ausnehmungen 18. Dabei ist die Nabe 48 derart auf der Welle 10 angeordnet, dass jeder der Nabenbogenabschnitte 56 in genau einer der Ausnehmungen 18 angeordnet ist. Wie insbesondere aus Fig. 8f erkennbar ist, ist die Innenwand 54 der Nabenöffnung 52 im Bereich der Nabenbogenabschnitte 56 der radialen Ausnehmungswand 22 der jeweiligen Ausnehmung 18 zugewandt angeordnet. Außerdem steht eine erste Seitenfläche 70 der Nabe 48 mit den axialen Ausnehmungswänden 20 der Ausnehmungen 18 in Wirkverbindung, in dem die erste Seitenfläche 70 direkt an den axialen Ausnehmungswänden 20 anliegt (siehe insbesondere Fig. 8e).

Die Nabe 48 ist derart auf der Welle 10 angeordnet, dass die Nabenlängsachse 50 entlang der Wellenlängsachse 12 ausgerichtet und auf der Wellenlängsachse 12 angeordnet ist.

Die Nabe weist neben der ersten Seitenfläche 70 eine der ersten Seitenfläche 70 gegenüberliegende und in Fig. 8a gut sichtbare zweite Seitenfläche 72 auf. Die Seitenflächen 70, 72 grenzen stirnseitig an die Innenwand 54 der Nabe 48 an und sind orthogonal zu der Nabenlängsachse 50 ausgerichtet. Die Kante zwischen der Innenwand 54 und der ersten Seitenfläche 70 weist einen nabenseitigen Übergangsradius 74 auf (siehe auch Fig. 5a u. 5c), der dem wellenseitigen Übergangsradius 24 entspricht.

Die Welle 10 weist jeweils in den Bereichen der ersten Nabenbogenenden 60 und in den Bereichen der zweiten Nabenbogenenden 62 gegenüber der Nabe 48 ein Übermaß 76 auf, was aus der Zusammenschau der Fig. 8d, 8h u. 8i ersichtlich ist. In den zentralen Bereichen der Nabenbogenabschnitte 56 zwischen den jeweiligen ersten Nabenbogenenden 60 und den jeweiligen zweiten Nabenbogenende 62 ein Spiel 78 auf. Dies zeigt sich insbesondere in der Zusammenschau der Fig. 8d, 8e u. 8f. Dadurch kann eine spielfreie Verbindung zwischen der Nabe 48 und der Welle 10 erreicht werden, und gleichzeitig die erforderliche Montagekraft gering gehalten werden.

Wie Fig. 8a zeigt, ist die Welle-Nabe-Verbindung 68 derart ausgebildet, dass der Rand 44 der Welle 10 radial nach außen und axial in Richtung der Nabe 48 umgeformt ist, und die zweite Seitenfläche 72 der Nabe mit dem umgeformten Rand 44 zur axialen Sicherung der Nabe 48 auf der Welle 10 in Wirkverbindung steht. Dabei liegt der der umgeformte Rand 44 unmittelbar an der zweiten Seitenfläche 72 an.

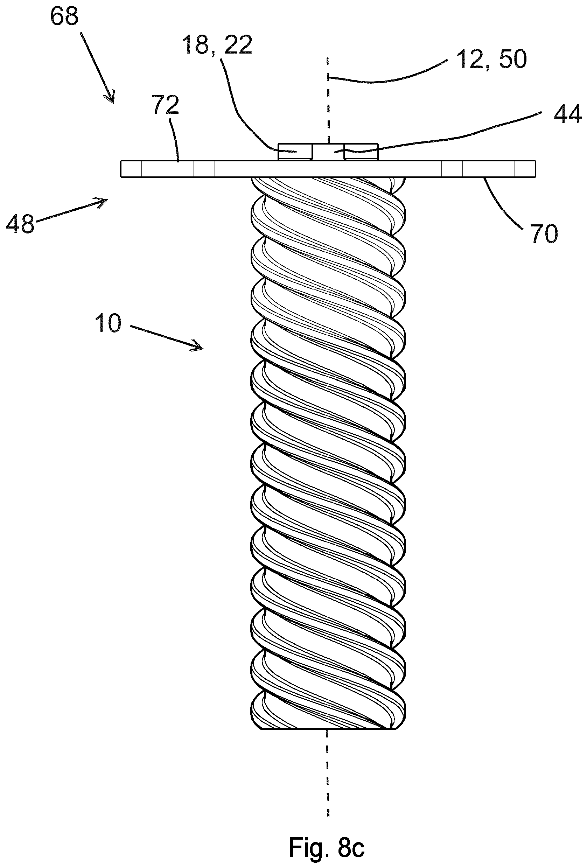

Die Welle-Nabe-Verbindung 68 kann dabei hergestellt werden, indem zunächst die Welle 10 und die Nabe 48 bereitgestellt werden und die Nabe 48, wie zuvor beschrieben, auf der Welle 10 angeordnet wird. In diesem Zustand, in dem noch keine Verformung des Randes 44 stattgefunden hat, ist die Welle-Nabe-Verbindung in den Fig. 8c bis 8i gezeigt. Anschließend kann der axial über die Nabe 48 hinausragende Rand 44 radial nach außen und axial in Richtung der Nabe 48 umgeformt, insbesondere umgebördelt, werden, beispielsweise durch ein Taumelverfahren oder ein Rollierverfahren. Sobald der Rand 44 an der zweiten Seitenfläche 72 anliegt, wird das Umformen vorzugsweise beendet, um die Festigkeit des umgeformten Randes 44 nicht zu beeinträchtigen. Der Zustand, indem der Rand an der zweiten Seitenfläche 72 anliegt, ist in Fig. 8a gezeigt.

Bezugszeichenliste

| 10 | Welle |
| 12 | Wellenlängsachse |
| 14 | Wellenmantelfläche |
| 16 | Wellenende |
| 18 | Ausnehmung |
| 20 | axiale Ausnehmungswand |
| 22 | radiale Ausnehmungswand |
| 24 | wellenseitiger Übergangsradius |
| 28 | Ausnehmungsradius |
| 32 | Spindelzahn |
| 34 | Schnittfläche |
| 36 | erstes Wandende |
| 38 | zweites Wandende |
| 40 | erste Drehrichtung |
| 42 | zweite Drehrichtung |
| 44 | Rand |
| 46 | Zentralbohrung |
| 48 | Nabe |
| 50 | Nabenlängsachse |
| 52 | Nabenöffnung |
| 54 | Innenwand |
| 56 | Nabenbogenabschnitt |
| 58 | Nabenbogenradius |
| 60 | erstes Nabenbogenende |
| 62 | zweites Nabenbogenende |
| 64 | Freistich |
| 65 | Freistichradius |
| 66 | tangentenstetiger Übergang |
| 68 | Welle-Nabe-Verbindung |
| 70 | erste Seitenfläche |
| 72 | zweite Seitenfläche |
| 74 | nabenseitiger Übergangsradius |
| 76 | Übermaß |
| 78 | Spiel |

**Patentansprüche**

1. Welle (10), zur Übertragung eines Drehmoments und/oder einer Axialkraft, mit einer Wellenlängsachse (12), einer Wellenmantelfläche (14) und einem Wellenende (16), wobei die Wellenmantelfläche (14) mindestens eine Ausnehmung (18) mit einer axialen Ausnehmungswand (20) und einer an die axiale Ausnehmungswand (20) angrenzenden radialen Ausnehmungswand (22) aufweist, wobei die radiale Ausnehmungswand (22) ein erstes Wandende (36) und ein zweites Wandende (38) aufweist, und wobei die mindestens eine Ausnehmung (18) axial in Richtung des Wellenendes (16) geöffnet ist, wobei die radiale Ausnehmungswand (22) einen Ausnehmungsradius (28) aufweist, derart dass die radiale Ausnehmungswand (22) zumindest abschnittsweise eine konkave, von der Wellenlängsachse (12) abgewandte Ausnehmungsbogenform aufweist, **dadurch gekennzeichnet, dass** die Wellenmantelfläche (14) eine Spindelverzahnung mit mindestens einem Spindelzahn (32) aufweist.

2. Welle nach Anspruch 1, **dadurch gekennzeichnet, dass** sich die Ausnehmungsbogenform der radialen Ausnehmungswand (22) von dem ersten Wandende (36) bis zu dem zweiten Wandende (38) erstreckt und/oder der Ausnehmungsradius (28) variabel ausgebildet ist.

3. Welle nach einem der vorhergehenden Ansprüche, **dadurch gekennzeichnet, dass** die Ausnehmungsbogenform der radialen Ausnehmungswand (22) zumindest einem Abschnitt einer Hypotrochoide entspricht.

4. Welle nach Anspruch 3, **dadurch gekennzeichnet, dass** ein Hypotrochoidenmittelpunkt der Hypotrochoide auf der Wellenlängsachse (12) angeordnet ist.

5. Welle nach einem der vorhergehenden Ansprüche, **dadurch gekennzeichnet, dass** die axiale Ausnehmungswand (20) mindestens einer der mindestens einen Ausnehmung (18) zumindest abschnittsweise von einer Schnittfläche (34) des mindestens einen Spindelzahns (32) gebildet ist.

6. Welle nach Anspruch 5, **dadurch gekennzeichnet, dass** die Schnittfläche (34) des mindestens einen Spindelzahns (32) beabstandet zu dem ersten Wandende (36) und/oder dem zweiten Wandende (38) der radialen Ausnehmungswand (22) angeordnet ist.

7. Welle nach einem der Ansprüche 5 bis 6, **dadurch gekennzeichnet, dass** die mindestens eine Ausnehmung (18) eine Mehrzahl von Ausnehmungen (18) und der mindestens eine Spindelzahn (32) eine Mehrzahl von Spindelzähnen (32) umfasst, wobei die Anzahl der Ausnehmungen (18) der Anzahl der Spindelzähne (32) entspricht, und wobei die jeweilige axiale Ausnehmungswand (20) jeder der Ausnehmungen (18) zumindest abschnittsweise von der Schnittfläche (34) einer der Spindelzähne (32) gebildet ist.

8. Welle nach einem der vorhergehenden Ansprüche, **dadurch gekennzeichnet, dass** zwischen der axialen Ausnehmungswand (20) und dem Wellenende (16) ein Rand (44) angeordnet ist.

9. Nabe (48) mit einer Nabenlängsachse (50), einer sich entlang der Nabenlängsachse (50) erstreckenden Nabenöffnung (52), und einer die Nabenöffnung (52) radial begrenzenden Innenwand (54),

   wobei die Innenwand (54) mindestens einen Nabenbogenabschnitt (56) mit einem Nabenbogenradius (58) aufweist, derart dass der mindestens eine Nabenbogenabschnitt (56) eine konvexe, der Nabenlängsachse (50) zugewandte Nabenbogenform aufweist, **dadurch gekennzeichnet, dass** der mindestens eine Nabenbogenabschnitt (56) ein erstes Nabenbogenende (60) und ein zweites Nabenbogenende (62) aufweist, wobei jedes der Nabenbogenenden (60, 62) an jeweils einen Freistich (64) angrenzt.

10. Nabe nach Anspruch 9,
    **dadurch gekennzeichnet, dass** der Nabenbogenradius (58) konstant ausgebildet ist.

11. Nabe nach einem der Ansprüche 9 bis 10,
    **dadurch gekennzeichnet, dass** der mindestens eine Nabenbogenabschnitt (56) an dem ersten Nabenbogenende (60) einen tangentenstetigen Übergang (66) zu dem an das erste Nabenbogenende (60) angrenzenden Freistich (64) und/oder an dem zweiten Nabenbogenende (62) einen tangentenstetigen Übergang (66) zu dem an das zweite Nabenbogenende (62) angrenzenden Freistich (64) aufweist.

12. Nabe nach einem der Ansprüche 9 bis 11,
    **dadurch gekennzeichnet, dass** der mindestens eine Nabenbogenabschnitt (56) eine Mehrzahl an Nabenbogenabschnitten (56) umfasst, die gleichmäßig in einer Umfangsrichtung der Nabenöffnung (52) um die Nabenlängsachse (50) angeordnet sind.

13. Welle-Nabe-Verbindung (68) mit einer Welle (10) nach einem der Ansprüche 1 bis 8 und einer Nabe (48) nach einem der Ansprüche 9 bis 12,
    wobei die Nabe (48) derart auf der Welle (10) angeordnet ist, dass

    • der mindestens eine Nabenbogenabschnitt (56) in der mindestens einen Ausnehmung (18) angeordnet ist,
    • die Innenwand (54) der Nabenöffnung (52) im Bereich des mindestens einen Nabenbogenabschnitts (56) der radialen Ausnehmungswand (22) der mindestens einen Ausnehmung (18) zugewandt angeordnet ist, und
    • eine erste Seitenfläche (70) der Nabe (48) mit der axialen Ausnehmungswand (20) der mindestens einen Ausnehmung (18) in Wirkverbindung steht.

14. Welle-Nabe-Verbindung nach Anspruch 13,
    **dadurch gekennzeichnet, dass** der mindestens eine Nabenbogenabschnitt (56) in Anzahl und Anordnung der mindestens einen Ausnehmung (18) entspricht.

15. Welle-Nabe-Verbindung nach einem der Ansprüche 13 bis 14,
    **dadurch gekennzeichnet, dass** die Welle (10) im Bereich des ersten Nabenbogenendes (60) und im Bereich des zweiten Nabenbogenendes (62) der mindestens einen Ausnehmung (18) gegenüber der Nabe (48) ein Übermaß (76) aufweist, und dass die Welle (10) in einem zentralen, zwischen dem ersten Nabenbogenende (60) und dem zweiten Nabenbogenende (62) angeordneten Bereich des mindestens einen Nabenbogenabschnitts (56) ein Spiel (78) gegenüber der Nabe (48) aufweist.

16. Welle-Nabe-Verbindung nach einem der Ansprüche 13 bis 15 mit einer Welle nach Anspruch 8,
    **dadurch gekennzeichnet, dass** der Rand (44) der Welle (10) radial nach außen und axial in Richtung der Nabe (48) umgeformt ist, sodass eine der ersten Seitenfläche (70) gegenüber angeordnete zweite Seitenfläche (72) der Nabe (48) mit dem umgeformten Rand (44) in Wirkverbindung steht.

17. Elektrischer Aktuator mit einer Welle-Nabe-Verbindung (68) nach einem der Ansprüche 13 bis 16.

**Claims**

1. Shaft (10), for transmitting a torque and/or an axial force, having a shaft longitudinal axis (12), a shaft lateral surface (14), and a shaft end (16), wherein the shaft lateral surface (14) has at least one recess (18) with an axial recess wall (20) and a radial recess wall (22) adjacent to the axial recess wall (20), wherein the radial recess wall (22) has a first wall end (36) and a second wall end (38), and wherein the at least one recess (18) is axially open in the direction of the shaft end (16), wherein the radial recess wall (22) has a recess radius (28), such that the radial recess wall (22) has, at least in sections, a concave recess arc shape facing away from the shaft longitudinal axis (12),
   **characterized in that** the shaft lateral surface (14) has a splined toothing with at least one spline tooth (32).

2. Shaft according to claim 1,
   **characterized in that** the recess arc shape of the radial recess wall (22) extends from the first wall end (36) to the second wall end (38) and/or the recess radius (28) is of variable design.

3. Shaft according to one of the preceding claims, **characterized in that** the recess arc shape of the radial recess wall (22) corresponds at least to a section of a hypotrochoid.

4. Shaft according to claim 3, **characterized in that** a hypotrochoid center of the hypotrochoid is arranged on the shaft longitudinal axis (12).

5. Shaft according to one of the preceding claims, **characterized in that** the axial recess wall (20) of at least one of the at least one recess (18) is formed, at least in sections, by a cut surface (34) of the at least one spline tooth (32).

6. Shaft according to claim 5, **characterized in that** the cut surface (34) of the at least one spline tooth (32) is arranged at a distance from the first wall end (36) and/or the second wall end (38) of the radial recess wall (22).

7. Shaft according to one of claims 5 to 6,

   **characterized in that** the at least one recess (18) comprises a plurality of recesses (18) and the at least one spline tooth (32) comprises a plurality of spline teeth (32), wherein the number of recesses (18) corresponds to the number of spline teeth (32), and wherein the respective axial recess wall (20) of each of the recesses (18) is formed, at least in sections, by the cut surface (34) of one of the spline teeth (32).

8. Shaft according to one of the preceding claims, **characterized in that** an edge (44) is arranged between the axial recess wall (20) and the shaft end (16).

9. Hub (48), having a hub longitudinal axis (50), a hub opening (52) extending along the hub longitudinal axis (50), and an inner wall (54) radially delimiting the hub opening (52),

   wherein the inner wall (54) has at least one hub arc section (56) with a hub arc radius (58), such that the at least one hub arc section (56) has a convex hub arc shape facing toward the hub longitudinal axis (50), **characterized in that** the at least one hub arc section (56) has a first hub arc end (60) and a second hub arc end (62), wherein each of the hub arc ends (60, 62) adjoins a respective undercut (64).

10. Hub according to claim 9, **characterized in that** the hub arc radius (58) is of constant design.

11. Hub according to one of claims 9 to 10, **characterized in that** the at least one hub arc section (56) has, at the first hub arc end (60), a tangentially continuous transition (66) to the undercut (64) adjacent to the first hub arc end (60) and/or, at the second hub arc end (62), a tangentially continuous transition (66) to the undercut (64) adjacent to the second hub arc end (62).

12. Hub according to one of claims 9 to 11, **characterized in that** the at least one hub arc section (56) comprises a plurality of hub arc sections (56), which are arranged uniformly in a circumferential direction of the hub opening (52) around the hub longitudinal axis (50).

13. Shaft-hub connection (68) having a shaft (10) according to one of claims 1 to 8 and a hub (48) according to one of claims 9 to 12, wherein the hub (48) is arranged on the shaft (10) such that

   • the at least one hub arc section (56) is arranged in the at least one recess (18),
   • the inner wall (54) of the hub opening (52), in the region of the at least one hub arc section (56), is arranged facing the radial recess wall (22) of the at least one recess (18), and
   • a first side surface (70) of the hub (48) is in operative connection with the axial recess wall (20) of the at least one recess (18).

14. Shaft-hub connection according to claim 13, **characterized in that** the at least one hub arc section (56) corresponds in number and arrangement to the at least one recess (18).

15. Shaft-hub connection according to one of claims 13 to 14, **characterized in that** the shaft (10), in the region of the first hub arc end (60) and in the region of the second hub arc end (62), has an interference (76) relative to the hub (48) in the at least one recess (18), and that the shaft (10), in a central region of the at least one hub arc section (56) arranged between the first hub arc end (60) and the second hub arc end (62), has a clearance (78) relative to the hub (48).

16. Shaft-hub connection according to one of claims 13 to 15 having a shaft according to claim 8, **characterized in that** the edge (44) of the shaft (10) is formed outward radially and axially in the direction of the hub (48), so that a second side surface (72) of the hub (48), arranged opposite the first side surface (70), is in operative connection with the formed edge (44).

17. Electric actuator having a shaft-hub connection (68) according to one of claims 13 to 16.

## Revendications

1. Arbre (10) de transmission d'un couple ou d'une force axiale, comprenant un axe (12) longitudinal d'arbre, une surface (14) latérale d'arbre et un bout (16) d'arbre, dans lequel la surface (14) latérale de l'arbre a au moins un évidement (18) ayant une paroi (20) axiale d'évidement et une paroi (22) radiale d'évidement voisine de la paroi (20) axiale de l'évidement, dans lequel la paroi (22) radiale de l'évidement a une première extrémité (36) de paroi et une deuxième extrémité (38) de paroi, et dans lequel le au moins un évidement (18) est ouvert axialement dans la direction du bout (16) de l'arbre, dans lequel la paroi (22) radiale de l'évidement a un rayon (28) d'évidement, tel que la paroi (22) radiale de l'évidement a au moins par endroit une forme arquée d'évidement, concave, non tournée vers l'axe (12) longitudinal de l'arbre,
   **caractérisé en ce que** la surface (14) latérale de l'arbre a une denture de vis ayant au moins une dent (32) de vis.

2. Arbre suivant la revendication 1,
   **caractérisé en ce que** la forme arquée d'évidement de la paroi (22) radiale de l'évidement s'étend de la première extrémité (36) de la paroi à la deuxième extrémité (38) de la paroi et/ou le rayon (28) de l'évidement est variable.

3. Arbre suivant l'une des revendications précédentes,
   **caractérisé en ce que** la forme arquée d'évidement de la paroi (22) radiale de l'évidement correspond à au moins une partie d'une hypotrochoïde.

4. Arbre suivant la revendication 3,
   **caractérisé en ce qu'**un centre de l'hypotrochoïde est disposé sur l'axe (12) longitudinal de l'arbre.

5. Arbre suivant l'une des revendications précédentes,
   **caractérisé en ce que** la paroi (20) axiale d'évidement d'au moins l'un des évidements (18) est formée, au moins en partie, par une surface (34) de coupe d'au moins une dent (32) de vis.

6. Arbre suivant la revendication 5,
   **caractérisé en ce que** la surface (34) de coupe de la au moins une dent (32) de vis est à distance de la première extrémité (36) et/ou la deuxième extrémité (38) de la paroi (22) radiale de l'évidement.

7. Arbre suivant l'une des revendications 5 à 6,
   **caractérisé en ce qu'**au moins un évidement (18) comprend une pluralité d'évidements (18) et la au moins une dent (32) de vis comprend une pluralité de dents (32) de vis, dans lequel le nombre des évidements (18) correspond au nombre des dents (32) de vis et dans lequel la paroi (20) axiale respective d'évidement de chacun des évidements (18) est formée au moins par endroit de la surface (34) de coupe de l'une des dents (32) de vis.

8. Arbre suivant l'une des revendications précédentes,
   **caractérisé en ce qu'**un bord (44) est disposé entre la paroi (20) axiale de l'évidement et le bout (16) de l'arbre.

9. Moyeu (48) ayant un axe (50) longitudinal de moyeu, une ouverture (52) de moyeu s'étendant le long de l'axe (50) longitudinal de moyeu, et une paroi (54) intérieure délimitant radialement l'ouverture (52) du moyeu,

   dans lequel la paroi (54) intérieure a au moins une partie (56) d'arc de moyeu ayant un rayon (58) d'arc de moyeu, de manière à ce que la au moins une partie (56) d'arc de moyeu ait une forme d'arc de moyeu convexe, tournée vers l'axe (50) longitudinal du moyeu,
   **caractérisé en ce qu'**au moins une partie (56) d'arc de moyeu a une première extrémité (60) d'arc de moyeu et une deuxième extrémité (62) d'arc de moyeu, dans lequel chacune des extrémités (60, 62) d'arc de moyeu est voisine respectivement d'un dégagement (64) par rainure.

10. Moyeu suivant la revendication 9,
    **caractérisé en ce que** le rayon (58) de l'arc du moyeu est constant.

11. Moyeu suivant l'une des revendications 9 à 10,
    **caractérisé en ce que** la au moins une partie (56) d'arc de moyeu a, à la première extrémité (60) de l'arc du moyeu, une transition (66) tangentielle continue au dégagement (64) par rainure, voisin de la première extrémité (60) de l'arc du moyeu et/ou sur la deuxième extrémité (62) de l'arc du moyeu, une transition (66) tangentielle continue au dégagement (64) par rainure, voisin de la deuxième extrémité (62) de l'arc du moyeu.

12. Moyeu suivant l'une des revendications 9 à 11,
    **caractérisé en ce que** la au moins la partie (56) d'arc du moyeu comprend une pluralité de parties (56) d'arc de moyeu, qui sont disposées uniformément dans une direction périphérique de l'ouverture (52) du moyeu autour de l'axe (50) longitudinal du moyeu.

**13.** Liaison-arbre-moyeu (68) comprenant un arbre (10) suivant l'une des revendications 1 à 8 et un moyeu (48) suivant l'une des revendications 9 à 12, dans laquelle le moyeu (48) est monté sur l'arbre (10), de manière à ce que

- au moins une partie (56) d'arc du moyeu soit disposée dans au moins un évidement (18),
- la paroi (54) intérieure de l'ouverture (52) du moyeu, dans la zone de la au moins une partie (56) d'arc du moyeu soit tournée vers la paroi (22) radiale d'évidement du au moins un évidement (18), et
- une première surface (70) latérale du moyeu (48) soit en liaison d'action avec la paroi (20) axiale du au moins un évidement (18).

**14.** Liaison-arbre-moyeu suivant la revendication 13, **caractérisée en ce que** la au moins une partie (56) d'arc du moyeu correspond en nombre et en agencement à le au moins un évidement (18).

**15.** Liaison-arbre-moyeu suivant l'une des revendications 13 à 14, **caractérisée en ce que** l'arbre (10) a, dans la zone de la première extrémité (60) d'arc du moyeu et dans la zone de la deuxième extrémité (62) d'arc du moyeu du au moins un évidement (18), une cote (76) en excès par rapport au moyeu (48) et **en ce que** l'arbre (10) a, dans une zone centrale, disposée entre la première extrémité (60) d'arc du moyeu et la deuxième extrémité (62) d'arc du moyeu de la au moins une partie (56) d'arc du moyeu, un jeu (78) par rapport au moyeu (48).

**16.** Liaison-arbre-moyeu suivant l'une des revendications 13 à 15, comprenant un arbre suivant la revendication 8, **caractérisée en ce que** le bord (44) de l'arbre (10) est déformé radialement vers l'extérieur et axialement en direction du moyeu (48), de manière à ce qu'une deuxième surface (72) latérale disposée, de manière opposée à la première surface (70) latérale, du moyeu (48) soit en liaison d'action avec le bord (44) déformé.

**17.** Actionneur électrique comprenant une liaison-arbre-moyeu (68) suivant l'une des revendications 13 à 16.

Fig. 1b

Fig. 1a

Fig. 2c

Fig. 2b

Fig. 2a

Fig. 3

Fig. 4

Fig. 5b

Fig. 5c

A-A

Fig. 5a

Fig. 6

Fig. 7

Fig. 8a

Fig. 8b

Fig. 8c

Fig. 8f

Fig. 8e

A - A

Fig. 8g

B - B

68

10

48

Fig. 8d

Fig. 8h

C - C

Fig. 8i

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2058542 A2
- EP 1632331 A1
- EP 2287484 A2
- DE 102016211797 A1
- DE 10238968 A1